# FASCICULE DE BREVET EUROPEEN

(11) **EP 3 727 857 B1**
(45) Date de publication et mention de la délivrance du brevet: **30.08.2023**
(21) Numéro de dépôt: 18833474.2
(22) Date de dépôt: 12.12.2018
(51) Int. Cl.: C03C 17/36, C03B 40/00

(54) **ARTICLE COMPRENANT UN REVETEMENT FONCTIONNEL ET UNE COUCHE DE PROTECTION TEMPORAIRE EN RESINE POLYFURANIQUE**
GEGENSTAND MIT EINER FUNKTIONELLEN BESCHICHTUNG UND EINER TEMPORÄREN SCHUTZSCHICHT AUS EINEM POLYFURANHARZ
ARTICLE COMPRISING A FUNCTIONAL COATING AND A TEMPORARY PROTECTIVE LAYER MADE OF POLYFURANIC RESIN

(30) Priorité: 18.12.2017 FR 1762312
(43) Date de publication de la demande: 28.10.2020
(73) Titulaire: SAINT-GOBAIN GLASS FRANCE, 92400 Courbevoie (FR)
(72) Inventeur: HEURTEFEU, Bertrand, 93290 TREMBLAY-EN-FRANCE (FR); LOHOU, Stéphane, 75019 PARIS (FR)
(74) Mandataire: Saint-Gobain Recherche
(86) Numéro de dépôt international: PCT/FR2018/053229
(87) Numéro de publication internationale: WO 2019/122611

(56) Documents cités:
- WO-A1-2015/019022
- WO-A1-2016/196561
- GB-A- 595 208
- GB-A- 940 713
- US-A- 4 439 348
- US-A- 5 332 774

## Description

L'invention concerne la protection des articles, en verre plat ou en vitro-céramique, portant au moins un revêtement fonctionnel. Ces articles sont destinés à subir des étapes de transport, de transformation et/ou de stockage.

Il est connu d'utiliser des articles comprenant des substrats portant des revêtements fonctionnels afin de conférer auxdits substrats des propriétés optiques (couches miroirs ou antireflets), thermiques (couches bas-émissives, contrôle solaire ou antisolaires, notamment à base de couches d'argent) ou électriques (couches antistatiques, couches conductrices transparentes).

Beaucoup de revêtements fonctionnels déposés sur des substrats présentent une résistance mécanique faible notamment une aptitude à la rayure élevée et une faible résistance à l'abrasion. Enfin, certains revêtements fonctionnels sont sujets à la corrosion lors du stockage notamment en milieu humide.

En particulier, les substrats portant des revêtements fonctionnels à base de couches métalliques, par exemple à base d'argent ou d'alliage à base d'argent, présentent ces inconvénients. Ces substrats revêtus sont généralement utilisés en vitrage feuilleté ou multiple, double ou triple, pour des applications dites de contrôle solaire et/ou de basse émissivité. Les revêtements fonctionnels sont alors volontairement encapsulés dans le vitrage.

Des substrats en verre portant des revêtements fonctionnels de ce type sont par exemple vendus par la société Saint-Gobain sous la dénomination Cool Lite^{®}. Ces substrats revêtus présentent de très bonnes performances optiques (TL, couleur) et thermiques (facteur solaire). Ces performances sont obtenues grâce à des revêtements fonctionnels comprenant des empilements complexes avec notamment plus d'une dizaine de couches minces d'épaisseur et de nature différentes.

Ces articles subissent des étapes de transformation diverses telles que des étapes de découpe, de lavage, de façonnage des bords, d'assemblage et/ou de traitements thermiques de type trempe, recuit et/ou bombage. Il est courant et pratique de réaliser l'assemblage et/ou les traitements divers sur un lieu autre que celui où est fabriqué l'article portant le revêtement fonctionnel. Ces articles subissent donc également des étapes de stockage et de transport.

Les sollicitations mécaniques susceptibles de générer des altérations de type rayures sont multiples et comprennent notamment :
- l'étape de stockage des articles après dépôt du revêtement fonctionnel sur le lieu de production,
- l'étape de déplacement des articles, empilés ou non, du lieu de production vers le lieu de transformation,
- l'étape de façonnage et de stockage sur le lieu de transformation,
- l'étape de lavage en milieu humide réalisée par exemple avant un traitement thermique ou un assemblage en double vitrage (DGU) ou en triple vitrage (TGU),
- les étapes de passage sur des rouleaux, par exemple sur les rouleaux du four en vue d'un traitement thermique notamment dans le cas de articles dits bi-fonctionnalisés portant des revêtements fonctionnels sur chaque face.

La visibilité des rayures une fois créées augmente de manière considérable lorsque l'article est soumis à un traitement thermique de type trempe. L'aptitude à la rayure des tels articles est préjudiciable du point de vue de l'esthétisme et du rendement de production. En effet, des rayures non visibles avant traitement thermique, qui ne se révèlent qu'après, peuvent entraîner un taux de rebut anormalement élevé. La perte financière est alors encore plus élevée car l'article mis au rebut intègre le coût du traitement thermique.

Les revêtements fonctionnels complexes et notamment ceux comprenant des couches minces métalliques à base d'argent présentent également une faible résistance à l'abrasion. Ces sollicitations mécaniques peuvent induire des défauts autres que des rayures tels que l'arrachement partiel ou total d'une ou plusieurs couches du revêtement fonctionnel.

Des phénomènes de corrosion peuvent également se produire selon la nature des matériaux constituant les revêtements fonctionnels. Mais surtout, leur occurrence est fortement dépendante des conditions d'humidité, de température et de la durée des différentes étapes de déplacement, stockage, lavage et/ou traitement thermique. Les revêtements fonctionnels comprenant notamment des couches métalliques ou des couches à base d'oxydes hygroscopiques sont sensibles à l'humidité.

Tous défauts ou rayures du revêtement fonctionnel, qu'ils soient dus à la corrosion ou à des sollicitations mécaniques, sont susceptibles d'altérer non seulement l'esthétique mais également les performances optiques et/ou énergétiques de l'article. La manipulation de substrats portant de tels revêtements requiert beaucoup de précautions lors des étapes de transport, de transformation et/ou de stockage.

Il est connu de protéger la surface d'un substrat par des films polymères adhésifs pelables. Ces films peuvent être déposés à l'état solide (comme par exemple dans la demande EP-A-1 610 940), ou à l'état liquide (brevet US 5,866,199). Ces solutions utilisant des films pelables présentent pour inconvénients :
- un cout élevé,
- une étape de pelage longue, fastidieuse et susceptible de laisser des traces de l'agent assurant la liaison entre le substrat et le film,
- une possible délamination du revêtement fonctionnel lors de la phase de pelage, et
- la nécessité de gérer les rebuts de films pelés.

Le dépôt d'un même film pelable à l'état solide sur des substrats de grande taille est parfois difficile et peut nécessiter l'utilisation de plusieurs films. Des problèmes se posent à la jonction des films :
- soit une partie du revêtement fonctionnel n'est pas couverte par l'un ou l'autre des films et dans ce cas la protection est incomplète,
- soit les films se chevauchent, ce qui entraîne potentiellement des risques lors de la découpe du substrat.

Des films polymères obtenus à partir d'une phase liquide et pouvant être enlevés par nettoyage à l'aide de solutions aqueuses ont également été développés. La demande WO 00/50354 divulgue par exemple des films obtenus à partir de solutions aqueuses de polymères acryliques facilement éliminables à l'eau, puisque le polymère est lui-même soluble dans l'eau.

La demande WO 01/02496 divulgue un revêtement destiné à protéger temporairement un substrat pendant une étape de transport, de manipulation ou de stockage, par l'application d'un revêtement protecteur amovible. Le revêtement peut être un film obtenu à partir de solutions aqueuses de polymères. Les polymères constituant le film peuvent être choisis parmi les homopolymères ou copolymères d'amidon ou de caséine, les polymères dérivés de protéines, les polymères acryliques, les polyacrylamides, les polymères d'oxyde de polyalkylène, l'acétate de polyvinyle, les alcools polyvinylique, la polyvinylpyrrolidone, les copolymères styrène / acide acrylique, les copolymères éthylène / acide acrylique, les copolymères cellulosiques et les dérivés de la cellulose.

Le revêtement protecteur est préférentiellement éliminé par lavage aqueux. Selon un mode de réalisation non préférentiel, ce revêtement peut également être éliminé par décomposition thermique ou combustion.

Les couches de protection temporaire éliminables durant le lavage ne sont pas susceptibles de protéger le substrat contre la corrosion humide durant le stockage. Mais surtout, ces couches ne protègent pas le revêtement fonctionnel pendant les phases de lavage. De plus, elles présentent en outre l'inconvénient de provoquer une pollution de la machine à laver du transformateur.

La demande de brevet WO2015/019022 décrit un vitrage comprenant une couche de protection temporaire obtenue à partir d'une couche en méthacrylate.

Bien que cette solution donne satisfaction, la fabrication des acrylates, leur mise en oeuvre sur le vitrage et la nature des résidus issus de son élimination peuvent poser problème, par exemple en terme de toxicité ou encore pour des raisons environnementales.

Par ailleurs, la demande de brevet GB 595 208 A décrit l'application sur un substrat d'une couche comprenant une résine poly(alcool furfurylique).

Il existe donc un besoin de protéger temporairement les substrats portant un revêtement fonctionnel pendant les étapes de fabrication, de transformation, de transport et/ou de stockage, qui soit issu d'un produit essentiellement naturel, peu coûteux et facile à mettre en oeuvre, tout en remplissant les critères de résistance à la rayure. Ainsi la protection temporaire doit être suffisamment durable pour permettre une protection de la surface du substrat à la fois contre les altérations physiques et être facilement éliminable par un traitement thermique comme lors d'une trempe ou d'un bombage, sans entraîner de modifications des propriétés du revêtement fonctionnel qu'elle protège après son élimination.

A cet effet, l'invention a pour objet un article comprenant un substrat comprenant deux faces principales définissant deux surfaces principales séparées par des bords, ledit substrat portant :
- un revêtement fonctionnel déposé sur au moins une partie et de préférence la totalité d'une surface principale et
- une couche de protection temporaire déposée sur au moins une partie et de préférence la totalité du revêtement fonctionnel, dans lequel:
- la couche de protection temporaire a une épaisseur supérieure à 1 micromètre et de préférence inférieure à 50 micromètres,
- la couche de protection temporaire comprend ou de préférence est constituée essentiellement par une résine poly(alcool furfurylique),
- ledit substrat est en verre plat ou en vitro-céramique.

De préférence, le substrat portant le revêtement fonctionnel n'a pas subi de traitement thermique à une température supérieure à 400 °C.

De préférence encore, les produits de la polymérisation de l'alcool furfurylique représentent au moins 90% en masse de la masse de la couche de protection temporaire.

En principe, la couche de protection temporaire est directement au contact du revêtement fonctionnel.

Selon l'invention la couche de protection temporaire est obtenue directement sur le substrat par polymérisation de l'alcool approprié, de préférence en présence d'un catalyseur adapté à cet effet, notamment un catalyseur acide. On pourra par exemple se référer à la demande de brevet WO2012/123902 pour un exemple de procédé permettant d'obtenir une telle couche.

La couche de protection temporaire peut éventuellement être durcie par séchage, ou avantageusement par un traitement thermique notamment à une température comprise entre 50 et 300°C ou alternativement par cuisson IR.

La couche de protection temporaire selon l'invention est donc obtenue à partir d'une composition liquide comprenant de l'alcool furfurylique.

L'alcool furfurylique est obtenu par réduction du furfural issu de matières cellulosiques ou plus souvent de déchets végétaux tels que la bagasse de canne à sucre, le son de céréales, les grignons d'olives ou les bois résineux. Il est utilisé depuis plusieurs dizaines d'années pour la fabrication de moules de fonderie en sable. Au contraire d'autres revêtements de protection déjà décrits, il s'agit d'un produit naturel qui une fois pré-polymérisé sous la forme d'oligomère, présente moins 1% poids et de préférence moins de 0,1% poids de résidu d'alcool furfurylique. Le polymère ne présente en lui-même aucune toxicité, tout comme les résidus de sa combustion.

La présente invention concerne ainsi plus particulièrement l'utilisation d'une solution concentrée d'oligomères d'alcool furfurylique pour la fabrication d'une couche de protection d'un article composé d'un verre plat ou de vitro-céramique, revêtu d'un revêtement fonctionnel (type contrôle solaire), ladite protection étant assurée par cette couche positionnée au-dessus du revêtement fonctionnel.

La composition liquide comprend de préférence un catalyseur acide tel qu'un acide sulfonique. De préférence encore, il a été trouvé par la société déposante que la qualité du dépôt sur le substrat pouvait être améliorée en ajoutant un tensioactif dans la composition initiale servant d'agent mouillant, par exemple un copolymère siloxane polyéther ou encore un co-polymère d'oxyde de propylène et d'oxyde d'éthylène.

A partir de la polymérisation de l'alcool furfurylique, on obtient ainsi des résines polyfuraniques, c'est-à-dire des compositions liquides contenant des oligomères et/ou des polymères d'alcool furfurylique qui peuvent avantageusement être utilisés en tant que revêtement de protection temporaire de revêtement fonctionnel (notamment comprenant des couches à l'argent sensible à l'humidité sur verre).

La couche de protection temporaire selon l'invention est normalement destinée à être éliminée lors d'un traitement thermique de type trempe, recuit et/ou bombage à une température suffisante pour permettre son élimination par décomposition thermique. Cette couche de protection temporaire à base de résine poly(alcool furfurylique) peut être éliminée sans nuire aux propriétés optiques du substrat portant le revêtement fonctionnel. Une seule et même étape de traitement thermique du substrat protégé permet ainsi d'éliminer la protection du substrat et de conférer au substrat certaines propriétés ou conformation (substrat trempé et/ou bombé).

De préférence, le substrat portant le revêtement fonctionnel n'a pas subi de traitement thermique à température élevée de type trempe, recuit et/ou bombage, c'est-à-dire de traitement thermique à une température supérieure à 400 °C. Cela signifie que l'article formé par le substrat et le revêtement fonctionnel n'a pas subi de traitement thermique à température élevée. Cela signifie également que le procédé ne comporte pas d'étape de traitement thermique à température élevée, c'est-à-dire de traitement thermique à une température supérieure à 200 °C ou supérieure à 400 °C, entre le dépôt du revêtement fonctionnel et le dépôt de la couche de protection temporaire.

Cette couche de protection temporaire comprend essentiellement des matériaux organiques issus de la polymérisation de l'alcool furfurylique. La formulation chimique du polymère permet une combustion rapide et complète durant un traitement thermique et ne génère lors de sa décomposition que des molécules volatiles faciles à éliminer et sans danger pour l'environnement et l'opérateur.

Cette couche, non soluble dans l'eau, permet d'obtenir une protection efficace lors de l'étape de lavage et contre la corrosion humide.

De façon surprenante, la protection est conservée même lorsque le substrat subit des découpes successives. En effet, les substrats protégés selon l'invention semblent protégés des mécanismes de corrosion qui pourraient s'initier d'une part en pleine face mais également à partir du bord de découpe. Les substrats protégés selon l'invention peuvent donc être découpés plusieurs fois sans nécessiter de modifier la couche de protection et sans perdre les fonctions de protection mécanique et chimique.

L'invention a également pour objet le procédé de protection dudit article Dans la suite du texte, les modes de réalisation préférés s'appliquent de la même manière aux différents objets de l'invention, l'article et le procédé.

De manière surprenante, la couche de protection temporaire selon l'invention peut être totalement éliminée lors d'un traitement thermique par décomposition sans nuire aux propriétés optiques, énergétiques ou thermiques conférées au substrat par le revêtement fonctionnel. Ces propriétés avantageuses sont obtenues même lorsque le revêtement fonctionnel a été déposé par pulvérisation cathodique magnétron.

La couche de protection temporaire selon l'invention est destinée à être appliquée de préférence en sortie de la ligne de fabrication des substrats portant des revêtements fonctionnels. L'étape de dépôt peut être facilement intégrée dans le procédé de fabrication du substrat portant le revêtement fonctionnel.

L'application d'une couche de protection temporaire obtenue à partir d'une composition liquide par polymérisation de l'alcool furfurylique est ensuite durcie de préférence par traitement thermique ou encore par cuisson IR est particulièrement avantageuse.

La composition liquide présente, grâce au choix judicieux des constituants additionnels tels que des agents mouillants de tout type connu, comme par exemple des copolymères siloxane polyéther, (par exemple Tego^{®} Wet 250) ou copolymère à bloc poly(oxyde d'éthylène-oxyde de propylène) (par exemple Pluronic^{®} P-105), une viscosité adaptée pour permettre d'obtenir facilement une couche de protection temporaire d'épaisseur supérieure à 1 µm et une réactivité suffisante pour permettre une réticulation quasiment instantanée sur toute l'épaisseur. La nature chimique, le degré de réticulation, la densité ainsi que l'épaisseur de la couche de protection temporaire concourent à l'obtention d'une protection efficace contre l'abrasion, l'apparition de rayures et la corrosion. Ces propriétés de protection peuvent ainsi être obtenues même pour des épaisseurs inférieures à 50 micromètres, voire inférieures à 30 micromètres.

Bien que l'invention convienne tout particulièrement pour la protection de substrats portant des revêtements fonctionnels mécaniquement faibles, la solution de l'invention peut s'appliquer si besoin à la protection de substrats portant tout type de revêtement fonctionnel.

Le revêtement fonctionnel comprend au moins une couche fonctionnelle. La couche fonctionnelle est de préférence une couche pouvant agir sur le rayonnement solaire et/ou le rayonnement infrarouge de grande longueur d'onde. Ces couches fonctionnelles sont par exemple des couches fonctionnelles métalliques à base d'argent ou d'alliage métallique contenant de l'argent.

Le substrat peut comprendre un revêtement fonctionnel comprenant un empilement de couches minces comportant successivement à partir du substrat une alternance de n couches métalliques fonctionnelles, notamment de couches fonctionnelles à base d'argent ou d'alliage métallique contenant de l'argent, et de (n+1) revêtements antireflets, chaque revêtement antireflet comportant au moins une couche diélectrique, de manière à ce que chaque couche métallique fonctionnelle soit disposée entre deux revêtements antireflets.

L'article selon l'invention peut comprendre un empilement de couches minces comportant successivement à partir du substrat une alternance de deux couches métalliques fonctionnelles, notamment de couches fonctionnelles à base d'argent ou d'alliage métallique contenant de l'argent, et de trois revêtements antireflets, chaque revêtement antireflet comportant au moins une couche diélectrique, de manière à ce que chaque couche métallique fonctionnelle soit disposée entre deux revêtements antireflets.

L'article selon l'invention peut également comprendre un empilement de couches minces comportant successivement à partir du substrat une alternance de trois couches métalliques fonctionnelles, notamment de couches fonctionnelles à base d'argent ou d'alliage métallique contenant de l'argent, et de quatre revêtements antireflets, chaque revêtement antireflet comportant au moins une couche diélectrique, de manière à ce que chaque couche métallique fonctionnelle soit disposée entre deux revêtements antireflets.

L'épaisseur du revêtement fonctionnel est de préférence :
- supérieure à 100 nm, de préférence supérieure à 150 nm,
- inférieure à 300 nm, de préférence inférieure à 250 nm.

Selon un mode de réalisation avantageux de l'invention, le revêtement fonctionnel comprend une couche supérieure choisie parmi les nitrures, oxydes ou oxy-nitrures de titane, de zirconium et/ou d'hafnium. La couche supérieure du revêtement fonctionnel est la couche la plus éloignée du substrat et/ou la couche en contact direct avec la couche de protection temporaire.

La couche supérieure peut en particulier être une couche :
- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium.

L'épaisseur de ces couches supérieures est préférentiellement comprise entre 1 et 20 nm et mieux comprise entre 1 et 5 nm.

Selon une variante, la couche supérieure peut être une couche de nitrure de silicium éventuellement dopé à l'aluminium. L'épaisseur de cette couche supérieure est préférentiellement comprise entre 5 et 50 nm et mieux comprise entre 10 et 50 nm.

Le revêtement fonctionnel peut être déposé par tout moyen connu tel que par pulvérisation cathodique assistée par un champ magnétique, par évaporation thermique, par CVD ou PECVD, par pyrolyse, par dépôt par voie chimique, par voie de type sol-gel ou dépôt de couches inorganiques par voie humide.

Le revêtement fonctionnel est de préférence déposé par pulvérisation cathodique assistée par un champ magnétique. Selon ce mode de réalisation avantageux, toutes les couches du revêtement fonctionnel sont déposées par pulvérisation cathodique assistée par un champ magnétique. La couche de protection temporaire est avantageusement directement au contact du revêtement fonctionnel.

La couche de protection temporaire est essentiellement de nature organique. Les produits issus de la polymérisation de l'alcool furfurylique représentent au moins 90% en masse de la masse de la couche de protection temporaire après ladite polymérisation.

Selon un mode de réalisation avantageux, la couche de protection temporaire ne comprend pas de matière de remplissage minérale telle que des charges ou des pigments.

La couche de protection temporaire présente une épaisseur :
- supérieure à 1 micromètre, de préférence supérieure à 5 micromètres,
- inférieure à 100 micromètres, de préférence inférieure à 50 micromètres,
- comprise entre 2 et 100 micromètres, entre 5 et 50 micromètres ou entre 10 et 30 micromètres.

L'invention concerne également un procédé de protection d'un article comprenant un substrat comprenant deux faces principales définissant deux surfaces principales séparées par des bords, ledit substrat en verre plat ou en vitro-céramique portant un revêtement fonctionnel déposé sur au moins une partie d'une surface principale, ledit procédé de protection comprenant les étapes suivantes :
- préparer une composition liquide comprenant de l'alcool furfurylique,
- appliquer la composition sur au moins une partie du revêtement fonctionnel sur une épaisseur d'au moins 1 micromètre,
- faire polymériser la composition de façon à former la couche de protection temporaire en une résine poly(alcool furfurylique).

Selon des modes de réalisations avantageux d'un procédé selon l'invention, la composition liquide appliquée sur le substrat présente les caractéristiques suivantes :
- La composition liquide comprend un catalyseur acide de la réaction de polymérisation.
- Le catalyseur acide est choisi parmi les acides sulfoniques, en particulier l'acide p-toluène-sulfonique, l'acide pentyl-sulfonique, l'acide hexadecyl-sulfonique, l'acide tetradécyl-sulfonique, l'acide decyl-sulfonique ou l'acide dodecy-sulfonique ou les acides phosphoriques.
- La composition liquide comprend un tensioactif (ou un agent mouillant) notamment choisi dans le groupe constitué par les siloxanes polyéther ou les copolymères à bloc poly(oxyde d'éthylène-b-oxyde de propylène).
- La composition liquide présente une viscosité mesurée à 25 °C :
   - d'au moins 0,05 Pa.s, d'au moins 0,08 Pa.s, d'au moins 0,1 Pa.s, d'au moins 0,50 Pa.s,
   - d'au plus 5 Pa.s, d'au plus 2 Pa.s,
   - comprise entre 0,05 et 5 Pa.s.
- La composition liquide comprend en outre au moins un additif choisi parmi les plastifiants, les absorbeurs, des agents de séparation, des stabilisants à la chaleur et/ou à la lumière, des agents épaississants ou des modificateurs de surface,
- la somme desdits additifs est comprise entre 0 et 5 % en masse de la masse de la composition liquide.

La composition liquide peut être appliquée à température ambiante par tout moyen connu et notamment par enduction au rouleau, par aspersion, par trempage, par enduction au rideau, ou par pistoletage. La composition liquide est préférentiellement appliquée par enduction au rouleau. La vitesse de dépôt de la composition liquide peut être comprise entre 1 et 90 m/min.

La couche de protection temporaire peut être durcie :
- par séchage à une température inférieure à 200°C pendant une durée allant par exemple de 3 minutes à 30 minutes, notamment de 5 à 20 minutes,
- par irradiation IR.

Le substrat à protéger doit supporter un traitement thermique au-delà de 200°C, de préférence au-delà de 400 °C. L'invention concerne donc les substrats en verre plat et les substrats en vitro-céramique.

Avantageusement, le substrat portant la couche de protection temporaire n'a pas subi de traitement thermique de type trempe, recuit et/ou bombage, c'est-à-dire de traitement thermique à une température supérieure à 200 °C.

Le substrat en verre plat peut être incolore et/ou teinté. L'épaisseur du substrat est de préférence comprise entre 1 et 19 mm, plus particulièrement entre 2 et 10 mm, voire entre 3 et 6 mm.

Selon une variante de l'invention, la couche de protection temporaire peut servir à protéger le revêtement fonctionnel pendant une étape de dépôt d'un autre revêtement. Cet autre revêtement peut être déposé sur une partie de la surface principale du substrat portant le revêtement fonctionnel ou sur une partie de la surface principale du substrat ne portant pas le revêtement fonctionnel.

Il est notamment connu que pour l'obtention d'articles bi-fonctionnalisés portant un revêtement fonctionnel sur chaque face principale du substrat, le contact du revêtement fonctionnel déposé en premier avec les rouleaux du dispositif de dépôt durant le second passage permettant le dépôt du deuxième revêtement entraîne des altérations dommageables de la qualité du premier revêtement (pollution, rayures). Ces altérations devenant visibles après dépôt du deuxième revêtement fonctionnel et éventuellement trempe. L'invention permet de pallier à ce problème en protégeant le premier revêtement par une couche de protection destinée à disparaitre durant la trempe ou le bombage de l'article bi-fonctionnalisé.

Selon une autre variante de l'invention, la couche de protection temporaire peut servir à protéger la surface arrière de l'article pendant le dépôt d'un revêtement fonctionnel. En effet, le passage sur les rouleaux de la face arrière d'un article, par exemple en verre, lors du dépôt d'un revêtement fonctionnel, est susceptible d'altérer partiellement la dite surface (salissure, rayure). L'invention permet de pallier à ce problème en protégeant la surface arrière de l'article avant dépôt du premier revêtement.

La couche de protection temporaire peut être déposée :
- sur chacune des surfaces principales du substrat, et/ou
- sur au moins un bord du substrat, et/ou
- sur chacun des bords du substrat.

Lorsque la couche de protection temporaire est déposée sur chacune des surfaces principales de l'article et sur chacun des bords de l'article, la protection chimique et/ou mécanique est alors conférée sur l'entière surface de l'article.

La couche de protection temporaire peut être déposée sur un substrat en verre avant ou après une étape de découpe, c'est-à-dire sur un substrat en verre à la taille finale ou proche de la taille finale (primitif).

Au final, après les différentes étapes possibles mentionnées précédemment du substrat protégé, notamment de stockage, de déplacement, de façonnage, de lavage, de passage sur des rouleaux, la protection temporaire est éliminée.
Un procédé complet de protection selon l'invention d'un article tel que décrit précédemment donc comprenant les étapes suivantes :
- préparer une composition liquide comprenant de l'alcool furfurylique,
- appliquer la composition sur au moins une partie du revêtement fonctionnel sur une épaisseur d'au moins 1 micromètre,
- faire polymériser la composition de façon à former une couche de protection temporaire en résine poly(alcool furfurylique),
- éliminer ladite couche de protection temporaire notamment par un traitement thermique à température supérieure à 300°C, en particulier de type trempe, recuit et/ou bombage.

Le procédé de protection comprend normalement au final l'étape d'élimination de ladite couche de protection temporaire par un traitement thermique à température élevée. La température de traitement thermique est typiquement supérieure à 400 °C, voire supérieure à 450 °C. Les traitements thermiques sont choisis parmi un recuit, par exemple par un recuit flash tel qu'un recuit laser ou flammage, une trempe, et/ou un bombage.

Le traitement thermique nécessaire pour éliminer la couche de protection peut être un recuit dans un four statique ou dynamique. Le traitement thermique peut alors avoir pour objectif d'améliorer la cristallisation d'une ou plusieurs couches incluses dans l'empilement à protéger.

Le revêtement fonctionnel comprend au moins une couche fonctionnelle déposée lors d'une étape de dépôt par magnétron.

La couche de protection temporaire est formée immédiatement après l'étape de dépôt du revêtement fonctionnel. Selon l'invention, on considère que la couche de protection temporaire peut être formée « immédiatement après », lorsque la couche de protection temporaire peut être formée moins de 10 minutes, de préférence moins de 5 minutes et mieux moins de 1 minute après l'étape de dépôt du revêtement fonctionnel.

L'invention concerne également une ligne de fabrication d'un article comprenant un substrat comprenant deux faces principales définissant deux surfaces principales séparées par des bords, ledit substrat portant :
- un revêtement fonctionnel déposé sur au moins une partie d'une surface principale et
- une couche de protection temporaire déposée sur au moins une partie du revêtement fonctionnel, obtenue à partir d'une composition liquide,
caractérisé en ce qu'il comporte :
i) un dispositif de dépôt d'un revêtement fonctionnel,
ii) un dispositif de dépôt et de polymérisation d'une composition liquide telle que décrite précédemment comprenant un moyen de stockage et un moyen permettant l'application sous forme de couche de ladite composition liquide,
iii) des moyens permettant de déplacer ledit substrat des dispositifs i) à iii).

Le dispositif de dépôt d'un revêtement fonctionnel peut être un dispositif de dépôt par pyrolyse, un dispositif de dépôt par voie chimique et de préférence un dispositif de pulvérisation cathodique assistée par un champ magnétique (magnétron).

Le dispositif de dépôt d'une composition liquide comprenant un moyen de stockage et un moyen permettant l'application sous forme de couche de ladite composition liquide est de préférence un dispositif d'enduction au rouleau. Ce dispositif peut comprendre un rouleau d'application et un contre-rouleau. La composition liquide peut alors être amenée par pompage dans l'espace défini entre les deux rouleaux constituant un moyen de stockage et appliquée par entrainement des rouleaux.

L'article ou substrat en verre plat ou vitro-céramique protégé selon l'invention peut être empilé sans pollution croisée, ni apparition de rayures mécaniques, immédiatement après dépôt des revêtements fonctionnels.

L'article en verre plat ou vitro-céramique protégé selon l'invention répond avantageusement aux critères suivants :
- protection mécanique à la rayure se traduisant par exemple par une résistance au test Erichsen à la pointe (EST) d'au moins 4N, voire d'au moins 7N,
- protection aux sollicitations mécaniques de la transformation se traduisant par une résistance accrue du revêtement fonctionnel localisé sous la couche de protection au différent mode de stockage, à la brosse de machine à laver, au façonnage et à la découpe,
- résistance de la couche de protection durant la trempe pendant un temps suffisant pour que le verre reste hautement émissif durant un temps permettant un gain en énergie significatif,
- excellente adhésion de la couche de protection au revêtement fonctionnel pour supporter sans délamination toutes les étapes de transformation avant trempe,
- élimination de la couche de protection temporaire sans laisser de résidus minéralisés en cas de trempe ou de bombage quel que soit le type de chauffage (radiatif/convectif).

### EXEMPLES

### I. Matériaux utilisés

### 1. Substrats et couches fonctionnelles

Les substrats utilisés sont des substrats en verre plan d'environ 6 mm d'épaisseur obtenus par un procédé de flottage (" float ") qui consiste à déverser le verre en fusion sur un bain d'étain.

Des revêtements fonctionnels conférant des propriétés de contrôle solaire comprenant un empilement de couches minces ont été déposés grâce à un dispositif de pulvérisation cathodique assisté par champ magnétique (magnétron).

Le revêtement fonctionnel, appelé ci-après tri-couches Ag (Cool-Lite XTREM^{®} 70/33 II commercialisé par la société déposante), comprend successivement à partir du substrat une alternance de trois couches d'argent (couches métalliques fonctionnelles) et de quatre revêtements antireflets, chaque revêtement antireflet comportant au moins une couche diélectrique, de manière à ce que chaque couche métallique fonctionnelle soit disposée entre deux revêtements antireflets. L'épaisseur totale de ce revêtement fonctionnel est de l'ordre de 200 nm.

### 2. Couche de protection temporaire

Des compositions liquides sont réalisées avec la résine polyfuranique (ou poly(alcool furfurylique)) BioRez^{™} commercialisée par la société TransFurans Chemicals, Belgique. La résine est obtenue par polycondensation d'alcool furfurylique en présence d'un catalyseur acide. Elle présente un pH acide d'environ 5, une faible teneur en alcool furfurylique résiduel (inférieure à 1 %) et une viscosité à 25 °C inférieure à 1000 mPa.s. A la résine est ajoutée 0,17% massique d'agent de mouillage TEGO^{®} WET 250 de EVONIK (copolymère siloxane polyéther). Le mélange est ensuite déposé à l'aide d'une barre de Meyer sur le revêtement fonctionnel préalablement déposé sur le substrat.

Une fois déposé sur le verre, le revêtement est durci par un traitement thermique à 200°C pendant 15 minutes.

Ces essais ont été réalisés sur deux échantillons réalisés comme décrit précédemment mais dans lesquels on a déposé une quantité différente de la résine polyfuranique. Après séchage, les épaisseurs pour la couche de protection temporaire sont de 13 et 20 µm pour les deux échantillons respectivement C1 et C2.

Les principales caractéristiques des échantillons C1 et C2 et de leur procédé d'obtention sont reportées dans le tableau 1 ci-dessous :

**Tableau 1**

| | C1 | C2 |
|---|---|---|
| Épaisseur humide (µm) | 24 | 40 |
| Temps de cuisson 200°C | 15min | 15min |
| Type de cuisson | four | four |
| Dépôt homogène après cuisson | Oui | Oui |
| Epaisseur coating (µm) après cuisson | 13 | 20 |

### II. Evaluation des propriétés mécaniques

Les substrats sont soumis à une trempe thermique dans les conditions suivantes : 730°C pendant 240 secondes. Puis, un test Erichsen à la Pointe (EST) est pratiqué.

Le test Erichsen consiste à reporter la valeur de la force nécessaire, en Newton, pour réaliser une rayure dans l'empilement (pointe de Van Laar, bille d'acier).

Les indicateurs d'appréciation suivants ont été utilisés :
«+» : pas de rayure,
«0» : rayures non continues,
«-» : rayure continues.

Un substrat de référence portant un revêtement fonctionnel sans couche de protection temporaire est comparé aux deux substrats portant un revêtement fonctionnel et une couche de protection temporaire de 13 et de 20 micromètres (µm) d'épaisseur. Le test a été réalisé sur différents endroits de la surface d'un même substrat. Ces exemples montrent clairement l'excellente résistance à la rayure des articles protégés selon l'invention, comme reporté dans le tableau 2 qui suit.

**Tableau 2**

| Test Erichsen | 0,1 | 0,5 | 0,7 | 1 | 4 | 7 |
|---|---|---|---|---|---|---|
| Référence | + | + | + | 0 | - | - |
| C1-13 µm | + | + | + | + | + | 0 |
| C1-20 µm | + | + | + | + | + | + |

Le substrat ou article de référence comprend dès 1 N selon le test Erichsen de fines rayures et à 4N de nombreuses rayures continues très visibles, homogènes en épaisseur. Un même substrat protégé par une couche de protection temporaire selon l'invention comprend très peu de rayures après trempe pour des forces appliquées jusqu'à au moins 7 N. De plus, les rayures sont non-continues.

Ces essais montrent qu'un article portant une couche de protection de 13 µm d'épaisseur peut être considéré comme efficacement protégé.

### III. Evaluation des propriétés après trempe

La variation colorimétrique ΔE induite par la trempe du côté du revêtement fonctionnel en réflexion a été calculée. Pour cela :
- les couleurs en réflexion L*, a* et b* dans le système LAB mesurées selon l'illuminant D65, côté couches sont mesurées avant le dépôt de la couche de protection et après la trempe et
- la variation est mesurée de la façon suivante : ΔE = (Δa*² + Δb*² + ΔL*²)^{½}.

On n'observe pas de variation colorimétrique imputable à la présence de la couche de protection temporaire, le ΔE mesuré sur les échantillons C1 et C2 étant sensiblement égal à celui mesuré sur l'échantillon de référence.

Cela signifie que le dépôt et l'élimination de la couche de protection temporaire n'induit pas de modification des propriétés de l'empilement protégé.

## Revendications

1. Article comprenant un substrat comprenant deux faces principales définissant deux surfaces principales séparées par des bords, ledit substrat portant :
- un revêtement fonctionnel déposé sur au moins une partie d'une surface principale et
- une couche de protection temporaire déposée sur au moins une partie du revêtement fonctionnel,
dans lequel:
- la couche de protection temporaire a une épaisseur supérieure à 1 micromètre et préférentiellement inférieure à 100 micromètres,
- la couche de protection temporaire comprend ou est constituée essentiellement par une résine poly(alcool furfurylique),
- ledit substrat est en verre plat ou en vitro-céramique.

2. Article comprenant un substrat selon la revendication 1, **caractérisé en ce que** le substrat portant le revêtement fonctionnel n'a pas subi de traitement thermique à une température supérieure à 400 °C.

3. Article comprenant un substrat selon les revendications précédentes, **caractérisé en ce que** les produits de la polymérisation de l'alcool furfurylique représentent au moins 90% en masse de la masse de la couche de protection temporaire.

4. Article comprenant un substrat selon l'une quelconque des revendications précédentes **caractérisé en ce que** le revêtement fonctionnel comprend un empilement de couches minces comportant successivement à partir du substrat une alternance de n couches métalliques fonctionnelles à base d'argent ou d'alliage métallique contenant de l'argent, et de préférence (n+1) revêtements antireflets, chaque revêtement antireflet comportant au moins une couche diélectrique, de manière à ce que chaque couche métallique fonctionnelle soit disposée entre deux revêtements antireflets.

5. Article comprenant un substrat selon l'une quelconque des revendications précédentes **caractérisé en ce que** le revêtement fonctionnel comprend une couche supérieure choisie parmi les nitrures, oxydes ou oxy-nitrures de titane, de zirconium et/ou d'hafnium.

6. Article comprenant un substrat selon la revendication 5 **caractérisé en ce que** la couche supérieure est choisie parmi une couche :
- de nitrure de titane ; de nitrure de zirconium ; de nitrure d'hafnium ; de nitrure de titane et de zirconium ; de nitrure de titane, de zirconium et d'hafnium,
- d'oxyde de titane ; d'oxyde de zirconium ; d'oxyde d'hafnium ; d'oxyde de titane et de zirconium ; d'oxyde de titane, de zirconium et d'hafnium.

7. Article comprenant un substrat selon l'une quelconque des revendications précédentes **caractérisée en ce que** la couche de protection temporaire est déposée :
- sur chacune des surfaces principales du substrat et/ou
- sur au moins un bord du substrat et/ou
- sur chacun des bords du substrat.

8. Article comprenant un substrat selon l'une quelconque des revendications précédentes **caractérisé en ce que** la couche de protection temporaire est directement au contact du revêtement fonctionnel.

9. Article selon l'une quelconque des revendications précédentes, dans lequel ledit substrat est en verre plat.

10. Procédé de protection d'un article comprenant un substrat comprenant deux faces principales définissant deux surfaces principales séparées par des bords, ledit substrat, en verre plat ou en vitro-céramique, portant un revêtement fonctionnel déposé sur au moins une partie d'une surface principale, ledit procédé de protection comprenant les étapes suivantes :
- préparer une composition liquide comprenant de l'alcool furfurylique,
- appliquer la composition sur au moins une partie du revêtement fonctionnel sur une épaisseur d'au moins 1 micromètre,
- faire polymériser la composition de façon à former une couche de protection temporaire en une résine poly(alcool furfurylique).

11. Procédé de protection d'un article selon la revendication 10 dans lequel la composition liquide comprend un catalyseur acide de la réaction de polymérisation.

12. Procédé de protection d'un article selon la revendication 10 ou 11 dans lequel la composition liquide comprend un agent mouillant ou tensioactif.

13. Procédé de protection d'un article selon la revendication 10 comprenant un substrat comprenant deux faces principales définissant deux surfaces principales séparées par des bords, ledit substrat, de préférence en verre, portant un revêtement fonctionnel déposé sur au moins une partie d'une surface principale, ledit procédé de protection comprenant les étapes suivantes :
- préparer une composition liquide comprenant de l'alcool furfurylique,
- appliquer la composition sur au moins une partie du revêtement fonctionnel sur une épaisseur d'au moins 1 micromètre,
- faire polymériser la composition de façon à former une couche de protection temporaire en résine poly(alcool furfurylique),
- éliminer ladite couche de protection temporaire notamment par un traitement thermique à température supérieure à 300°C, en particulier de type trempe, recuit et/ou bombage.

## Patentansprüche

1. Artikel, umfassend ein Substrat mit zwei Hauptflächen, die zwei durch Kanten getrennte Hauptoberflächen definieren, wobei das Substrat trägt:
- eine Funktionsbeschichtung, die auf mindestens einem Teil einer Hauptoberfläche aufgebracht ist, und
- eine temporäre Schutzschicht, die auf mindestens einem Teil der Funktionsbeschichtung aufgebracht ist, wobei:
- die temporäre Schutzschicht eine Dicke von mehr als 1 Mikrometer und vorzugsweise weniger als 100 Mikrometer aufweist,
- die temporäre Schutzschicht ein Poly(furfurylalkohol)-Harz umfasst oder im Wesentlichen daraus besteht,
- das Substrat aus Flachglas oder Glaskeramik besteht.

2. Artikel, umfassend ein Substrat nach Anspruch 1, **dadurch gekennzeichnet, dass** das Substrat mit der Funktionsbeschichtung keiner Wärmebehandlung bei einer Temperatur von mehr als 400 °C unterzogen wurde.

3. Artikel, umfassend ein Substrat nach einem der vorstehenden Ansprüche, **dadurch gekennzeichnet, dass** die Polymerisationsprodukte von Furfurylalkohol mindestens 90 Masse-% der Masse der temporären Schutzschicht ausmachen.

4. Artikel, umfassend ein Substrat nach einem der vorstehenden Ansprüche, **dadurch gekennzeichnet, dass** die Funktionsbeschichtung einen Dünnschichtstapel umfasst, der aufeinanderfolgend ab dem Substrat eine Abfolge von n metallische Funktionsschichten auf Basis von Silber oder einer silberhaltigen Metalllegierung und vorzugsweise (n+1) Antireflexbeschichtungen aufweist, wobei jede Antireflexbeschichtung mindestens eine dielektrische Schicht aufweist, so dass jede metallische Funktionsschicht zwischen zwei Antireflexbeschichtungen angeordnet ist.

5. Artikel, umfassend ein Substrat nach einem der vorstehenden Ansprüche, **dadurch gekennzeichnet, dass** die Funktionsbeschichtung eine obere Schicht umfasst, die aus Nitriden, Oxiden oder Oxynitriden von Titan, von Zirkonium und/oder von Hafnium ausgewählt ist.

6. Artikel, umfassend ein Substrat nach Anspruch 5, **dadurch gekennzeichnet, dass** die obere Schicht ausgewählt ist aus einer Schicht:
- aus Titannitrid; aus Zirkoniumnitrid; aus Hafniumnitrid; aus Titan- und Zirkoniumnitrid, aus Titan-, Zirkonium- und Hafniumnitrid,
- aus Titanoxid; aus Zirkoniumoxid; aus Hafniumoxid; aus Titan- und Zirkoniumoxid; aus Titan-, Zirkonium- und Hafniumoxid.

7. Artikel, umfassend ein Substrat nach einem der vorstehenden Ansprüche, **dadurch gekennzeichnet, dass** die temporäre Schutzschicht aufgebracht ist:
- auf jeder der Hauptoberflächen des Substrats und/oder
- auf mindestens einer Kante des Substrats und/oder
- auf jeder der Kanten des Substrats.

8. Artikel, umfassend ein Substrat nach einem der vorstehenden Ansprüche, **dadurch gekennzeichnet, dass** die temporäre Schutzschicht in direktem Kontakt mit der Funktionsbeschichtung steht.

9. Artikel nach einem der vorstehenden Ansprüche, wobei das Substrat aus Flachglas besteht.

10. Verfahren zum Schutz eines Artikels, der ein Substrat mit zwei Hauptflächen umfasst, die zwei durch Kanten getrennte Hauptoberflächen definieren, wobei das Substrat, das aus Flachglas oder Glaskeramik besteht, eine Funktionsbeschichtung aufweist, die auf mindestens einem Teil einer Hauptoberfläche aufgebracht ist, wobei das Schutzverfahren folgende Schritte umfasst:
- Herstellen einer flüssigen Zusammensetzung, die Furfurylalkohol umfasst,
- Aufbringen der Zusammensetzung auf mindestens einen Teil der Funktionsbeschichtung in einer Dicke von mindestens 1 Mikrometer,
- Polymerisieren lassen der Zusammensetzung, um eine temporäre Schutzschicht aus einem Poly(furfurylalkohol)-Harz zu bilden.

11. Verfahren zum Schutz eines Artikels nach Anspruch 10, wobei die flüssige Zusammensetzung einen Säurekatalysator für die Polymerisationsreaktion umfasst.

12. Verfahren zum Schutz eines Artikels nach Anspruch 10 oder 11, wobei die flüssige Zusammensetzung ein Benetzungsmittel oder Tensid umfasst.

13. Verfahren zum Schutz eines Artikels nach Anspruch 10, der ein Substrat mit zwei Hauptoberflächen umfasst, die zwei durch Kanten getrennte Hauptoberflächen definieren, wobei das Substrat, vorzugsweise aus Glas, eine Funktionsbeschichtung trägt, die auf mindestens einem Teil einer Hauptoberfläche aufgebracht ist, wobei das Schutzverfahren folgende Schritte umfasst:
- Herstellen einer flüssigen Zusammensetzung, die Furfurylalkohol umfasst,
- Aufbringen der Zusammensetzung auf mindestens einen Teil der Funktionsbeschichtung in einer Dicke von mindestens 1 Mikrometer,
- Polymerisieren lassen der Zusammensetzung, um eine temporäre Schutzschicht aus Poly(furfurylalkohol)-Harz zu bilden,
- Entfernen der temporären Schutzschicht, insbesondere durch eine Wärmebehandlung bei einer Temperatur von mehr als 300 °C, insbesondere vom Typ Härten, Glühen und/oder Biegen.

## Claims

1. An article comprising a substrate comprising two main faces defining two main surfaces separated by edges, said substrate bearing:
- a functional coating deposited on at least part of a main surface and
- a temporary protective layer deposited on at least part of the functional coating, wherein:
- the temporary protective layer has a thickness of greater than 1 micrometer and preferentially less than 100 micrometers,
- the temporary protective layer comprises or consists essentially of a poly(furfuryl alcohol) resin,
- said substrate is made of flat glass or glass ceramic.

2. The article comprising a substrate according to claim 1,
**characterized in that** the substrate bearing the functional coating has not undergone heat treatment at a temperature above 400°C.

3. The article comprising a substrate according to one of the preceding claims, **characterized in that** the products of the polymerization of the furfuryl alcohol represent at least 90% by weight of the weight of the temporary protective layer.

4. The article comprising a substrate as claimed in any one of the preceding claims, **characterized in that** the functional coating comprises a stack of thin layers successively comprising, starting from the substrate, an alternation of n functional metallic layers based on silver or on a metal alloy containing silver, and preferably of (n+1) antireflection coatings, each antireflection coating comprising at least one dielectric layer, so that each functional metallic layer is positioned between two antireflection coatings.

5. The article comprising a substrate according to any of the preceding claims, **characterized in that** the functional coating comprises an upper layer selected from nitrides, oxides or oxynitrides of titanium, of zirconium and/or of hafnium.

6. The article comprising a substrate according to claim 5,
**characterized in that** the upper layer is selected from a layer:
- of titanium nitride; of zirconium nitride; of hafnium nitride; of titanium and zirconium nitride; of titanium, zirconium and hafnium nitride,
- of titanium oxide; of zirconium oxide; of hafnium oxide; of titanium zirconium oxide; of titanium zirconium hafnium oxide.

7. The article comprising a substrate according to any one of the preceding claims, **characterized in that** the temporary protective layer is deposited:
- on each of the main surfaces of the substrate and/or
- on at least one edge of the substrate and/or
- on each of the edges of the substrate.

8. The article comprising a substrate according to any one of the preceding claims, **characterized in that** the temporary protective layer is directly in contact with the functional coating.

9. The article according to any one of the preceding claims, wherein said substrate is made of flat glass.

10. A method for obtaining an article comprising a substrate comprising two main faces defining two main surfaces separated by edges, said substrate, made of flat glass or glass-ceramic, bearing a functional coating deposited on at least one portion of a main surface, said method comprising the following steps:
- preparing a liquid composition comprising furfuryl alcohol,
- applying the composition on at least one portion of the functional coating over a thickness of at least 1 micrometer,
- polymerizing the composition so as to form the temporary protective layer made of a poly(furfuryl alcohol) resin.

11. The method for protecting an article according to claim 10 wherein the liquid composition comprises an acid catalyst of the polymerization reaction.

12. The method for protecting an article according to claim 10 or 11 wherein the liquid composition comprises a wetting agent or surfactant.

13. A method for obtaining an article according to claim 10 comprising a substrate comprising two main faces defining two main surfaces separated by edges, said substrate, preferably made of glass, bearing a functional coating deposited on at least one portion of a main surface, said method comprising the following steps:
- preparing a liquid composition comprising furfuryl alcohol,
- applying the composition on at least one portion of the functional coating over a thickness of at least 1 micrometer,
- polymerizing the composition so as to form a temporary protective layer made of poly(furfuryl alcohol) resin.
- removing said temporary protective layer in particular by a heat treatment at a temperature of greater than 300°C, in particular of the tempering, annealing and/or bending type.
